# EUROPEAN PATENT APPLICATION

(11) **EP 4 411 869 A1**
(43) Date of publication of application: **07.08.2024**
(21) Application number: 23215550.7
(22) Date of filing: 11.12.2023
(51) Int. Cl.: H01M 4/133, H01M 4/587, H01M 10/0525, H01M 10/0567, H01M 10/0569, H01M 4/02

(54) **NON-AQUEOUS ELECTROLYTE SECONDARY BATTERY**

(30) Priority: 01.02.2023 JP 2023014082
(71) Applicant: Prime Planet Energy & Solutions, Inc., Chuo-ku Tokyo 103-0022 (JP)
(72) Inventor: TAKESHITA, Shuhei, Tokyo, 103-0022 (JP); SHINDO, Yohei, Tokyo, 103-0022 (JP); HOSOE, Kento, Tokyo, 103-0022 (JP)
(74) Representative: Kuhnen & Wacker Patent- und Rechtsanwaltsbüro PartG mbB

(57) **Abstract**

Provided is a nonaqueous electrolyte secondary battery having excellent input characteristics and excellent high-temperature storage characteristics. A nonaqueous electrolyte secondary battery disclosed here includes a positive electrode, a negative electrode, and a nonaqueous electrolyte. The negative electrode includes a negative electrode active material layer containing a negative electrode active material. The negative electrode active material includes carbon material particles having an average circularity of 0.86 or more. The negative electrode active material layer has an apparent density of 1.30 g/cm³ to 1.69 g/cm³. The nonaqueous electrolyte contains a nonaqueous solvent and an electrolyte salt. The nonaqueous solvent contains 1% by volume to 30% by volume of a carboxylate ester having 4 or less carbon atoms.

## Description

### TECHNICAL FIELD

The present disclosure relates to a nonaqueous electrolyte secondary battery.

### BACKGROUND ART

Recent nonaqueous electrolyte secondary batteries such as lithium ion secondary batteries are suitably used for, for example, portable power supplies for devices such as personal computers and portable terminals, and vehicle driving power supplies for vehicles such as battery electric vehicles (BEVs), hybrid electric vehicles (HEVs), and plug-in hybrid electric vehicles (PHEVs).

For application as vehicle driving power supplies, there has been an increasing demand for enhancing input and capacity of nonaqueous electrolyte secondary batteries. Regarding enhancement of capacity of nonaqueous electrolyte secondary batteries, it is known that a battery capacity per a volume increases by increasing a negative electrode density (i.e., apparent density of a negative electrode active material layer) (see, for example, Patent Document 1). Patent Document 1 describes that the negative electrode density is set at 1.3 to 1.7 g/cm³.

### CITATION LIST

### PATENT DOCUMENT

Patent Document 1: JP2022-120217A

### SUMMARY OF THE INVENTION

Through an intensive study, however, the inventors of the present disclosure have found the following problems. In the case of using a nonaqueous electrolyte secondary battery as a drive power supply of an HEV, the opportunity of charging the battery is limited to power generation during traveling of the HEV. Therefore, from the viewpoint of further increasing a travel range the HEV, further enhancement of input characteristics of the nonaqueous electrolyte secondary battery is demanded. On the other hand, the conventional technique described above still has insufficient input characteristics of nonaqueous electrolyte secondary batteries. In addition, in the conventional technique, when a nonaqueous electrolyte secondary battery is left at high temperatures (e.g., about 60°C), capacity of the battery significantly deteriorates.

Embodiments of the present disclosure provide nonaqueous electrolyte secondary batteries having excellent input characteristics and excellent storage characteristics at high temperature (high-temperature storage characteristics).

A nonaqueous electrolyte secondary battery disclosed here includes a positive electrode, a negative electrode, and a nonaqueous electrolyte. The negative electrode includes a negative electrode active material layer containing a negative electrode active material. The negative electrode active material includes carbon material particles having an average circularity of 0.86 or more. The negative electrode active material layer has an apparent density of 1.30 g/cm³ to 1.69 g/cm³. The nonaqueous electrolyte contains a nonaqueous solvent and an electrolyte salt. The nonaqueous solvent contains 1% by volume to 30% by volume of a carboxylate ester having 4 or less carbon atoms.

This configuration can provide nonaqueous electrolyte secondary batteries having both excellent input characteristics and excellent high-temperature storage characteristics.

### BRIEF DESCRIPTION OF THE DRAWINGS

FIG. 1 is a cross-sectional view schematically illustrating an internal structure of a lithium ion secondary battery according to one embodiment of the present disclosure.
FIG. 2 is a schematic disassembled view illustrating a structure of a wound electrode body of a lithium ion secondary battery according to one embodiment of the present disclosure.
FIG. 3 is a schematic cross-sectional view of a negative electrode for describing an example in which carbon material particles have low average circularities.
FIG. 4 is a schematic cross-sectional view of a negative electrode for describing an example in which carbon material particles have high average circularities.

### DETAILED DESCRIPTION OF THE PREFERRED EMBODIMENTS

An embodiment of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general technical knowledge in the field. In the drawings, members and parts having the same functions are denoted by the same reference characters for description. Dimensional relationships (e.g., length, width, and thickness) in the drawings do not reflect actual dimensional relationships. It should be noted that a numerical range expressed as "A to B" herein includes A and B.

A "secondary battery" herein refers to a storage device enabling repetitive charging and discharging. A "lithium ion secondary battery" herein refers to a secondary battery that uses lithium ions as charge carriers and performs charge and discharge by movement of charges accompanying lithium ions between positive and negative electrodes.

The present disclosure will be described in detail hereinafter using a flat square lithium ion secondary battery including a flat wound electrode body and a flat battery case as an example, but the present disclosure is not intended to be limited to the embodiment.

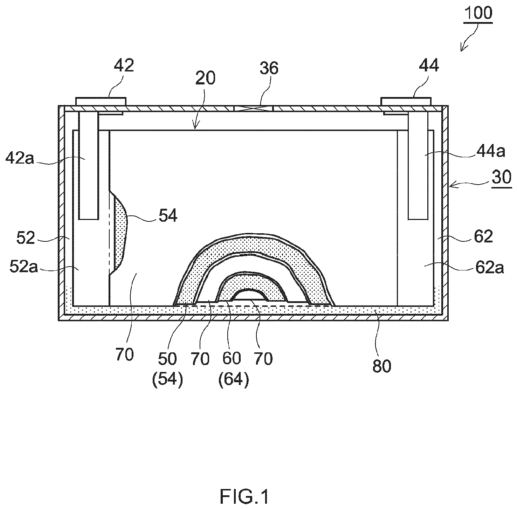

A lithium ion secondary battery 100 illustrated in FIG. 1 is a sealed battery in which a flat wound electrode body 20 and a nonaqueous electrolyte 80 are housed in a flat square battery case (i.e., an outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte 80. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminum. It should be noted that FIG. 1 does not strictly illustrate the amount of the nonaqueous electrolyte 80.

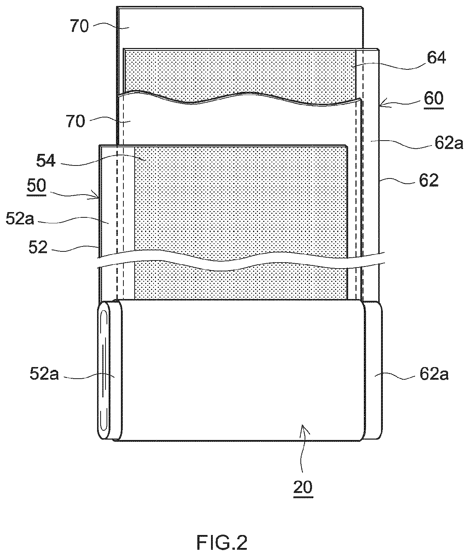

As illustrated in FIGS. 1 and 2, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of an elongated positive electrode current collector 52 along the longitudinal direction. In the negative electrode sheet 60, a negative electrode active material layer 64 is formed on one or each (each in this example) surface of an elongated negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

A load may be applied to the wound electrode body 20 in the thickness direction thereof. The load is desirably 0.1 kN/cm² or more, more desirably 0.4 kN/cm² or more. The load in this range is advantageous especially for application as a power supply for driving HEVs. The load can be a restriction load to be applied to a battery module of lithium ion secondary batteries 100 in the case where lithium ion secondary batteries 100 are constructed in the form of the battery module.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminum foil as the positive electrode current collector 52, the thickness thereof is not particularly limited, and is, for example, 5 µm or more and 35 µm or less, desirably 7 µm or more and 20 µm or less.

The positive electrode active material layer 54 contains a positive electrode active material. The positive electrode active material may be a known positive electrode active material to be used in a lithium ion secondary battery. Specifically, as the positive electrode active material, a lithium composite oxide or a lithium transition metal phosphate compound, for example, may be used. The crystal structure of the positive electrode active material is not specifically limited, and may be, for example, a layered structure, a spinel structure, or an olivine structure.

The lithium composite oxide is desirably a lithium transition metal composite oxide including at least one of Ni, Co, or Mn as a transition metal element, and specific examples of the lithium composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, and a lithium iron nickel manganese composite oxide. These positive electrode active materials can be used alone or two or more of them may be used in combination.

It should be noted that the "lithium nickel cobalt manganese composite oxide" herein includes not only oxides including Li, Ni, Co, Mn, and O as constituent elements, but also oxides including one or more additive elements besides the foregoing elements. Examples of the additive elements include transition metal elements and typical metal elements, such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies in the same manner to, for example, the lithium nickel composite oxide, the lithium cobalt composite oxide, the lithium manganese composite oxide, the lithium nickel manganese composite oxide, the lithium nickel cobalt aluminium composite oxide, and the lithium iron nickel manganese composite oxide.

Examples of the lithium transition metal phosphate compound include lithium iron phosphate (LiFePO₄), lithium manganese phosphate (LiMnPO₄), and lithium manganese iron phosphate.

The positive electrode active material is especially desirably a lithium nickel cobalt manganese composite oxide.

An average particle size (median particle size: D50) of the positive electrode active material is not particularly limited, and is, for example, 0.05 µm or more and 25 µm or less, desirably 1 µm or more and 20 µm or less, more desirably 3 µm or more and 15 µm or less. It should be noted that the average particle size (D50) of the positive electrode active material can be determined by, for example, a laser diffraction/scattering method.

The positive electrode active material layer 54 may include components other than the positive electrode active material, such as trilithium phosphate, a conductive agent, and a binder. Desired examples of the conductive agent include carbon materials such as carbon black (e.g., acetylene black (AB)), carbon nanotubes, and graphite. Examples of the binder include polyvinylidene fluoride (PVdF).

The content of the positive electrode active material in the positive electrode active material layer 54 (i.e., content of the positive electrode active material with respect to the total mass of the positive electrode active material layer 54) is not specifically limited, and is desirably 70% by mass or more, more desirably 80% by mass or more and 97% by mass or less, much more desirably 85% by mass or more and 96% by mass or less. A content of trilithium phosphate in the positive electrode active material layer 54 is not particularly limited, and is desirably 1% by mass or more and 15% by mass or less, more desirably 2% by mass or more and 12% by mass or less. The content of the conductive agent in the positive electrode active material layer 54 is not specifically limited, and is desirably 1% by mass or more and 15% by mass or less, more desirably 3% by mass or more and 13% by mass or less. The content of the binder in the positive electrode active material layer 54 is not specifically limited, and is desirably 1% by mass or more and 15% by mass or less, more desirably 1.5% by mass or more and 10% by mass or less.

The thickness of the positive electrode active material layer 54 is not particularly limited, and is, for example, 10 µm or more and 400 µm or less, desirably 20 µm or more and 300 µm or less.

The positive electrode sheet 50 may include an insulating layer (not shown) at the boundary between the positive electrode active material layer non-formed portion 52a and the positive electrode active material layer 54. The insulating layer may contain ceramic particles, for example.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness of the foil is not particularly limited, and is, for example, 5 µm or more and 35 µm or less, desirably 6 µm or more and 20 µm or less.

The negative electrode active material layer 64 contains a negative electrode active material. In this embodiment, as the negative electrode active material, at least carbon material particles having an average circularity of 0.86 or more are used. Examples of the carbon material constituting the particles include graphite, hard carbon, and soft carbon, and among these materials, graphite is desirable. Graphite may be natural graphite or artificial graphite, and may be amorphous carbon-coated graphite in which graphite is coated with an amorphous carbon material. Graphite is especially desirably amorphous carbon-coated graphite in which natural graphite is coated with an amorphous carbon material.

Desirably 75 % by mass or more, more desirably 90 % by mass or more, even more desirably 100 % by mass of the negative electrode active material is carbon material particles having an average circularity of 0.86 or more.

The circularity herein refers to a ratio of a circumference of a perfect circle having the same area as a projected area of particles to a circumference of a projected image of the particle (i.e., circularity = circumference of perfect circle having the same area as projected area of particles/circumference of projected image of particles). Thus, as the circularity is closer to one, the particle projected image approaches a perfect circle, and particles approach a complete sphere. The average circularity can be determined by, for example, obtaining circularities of 1000 or more carbon material particles with, for example, a commercially available static automated image analysis system (e.g., Morphologi series manufactured by Malvern Panalytical) and calculating an average of the obtained circularities.

The average circularity of the carbon material particles is desirably 0.87 or more, more desirably 0.88 or more, even more desirably 0.89 or more.

The average circularity of the carbon material particles used in this embodiment is higher than an average circularity of typical scaly graphite. Thus, carbon material particles having such a high average circularity can be typically obtained by performing a spheroidizing treatment on scaly graphite according to a known method. As an example, carbon material particles having such a high average circularity can be obtained by granulating scaly graphite into spherical shapes. Specifically, for example, an impact is applied to scaly graphite to firmly attach particles thereof to one another while the scaly graphite is rotated, and then the particles are granulated until spherical particles of several micrometers to several tens of micrometers are obtained. For such granulation, devices such as a ball mill, a bead mill, a hybridization system manufactured by NARA MACHINERY CO., LTD., Nobilta manufactured by HOSOKAWA MICRON CORPORATION, FM mixer manufactured by NIPPON COKE & ENGINEERING CO., LTD., COMPOSI manufactured by NIPPON COKE & ENGINEERING CO., LTD. can be used. At this time, the average circularity can be adjusted by changing treatment conditions (specifically, treatment time, the number of treatments, etc.).

Average particle sizes (median particle size: D50) of the negative electrode active material particles are not specifically limited, and are, for example, 0.1 µm or more and 50 µm or less, desirably 1 µm or more and 25 µm or less, more desirably 5 µm or more and 20 µm or less, even more desirably 7 µm or more and 15 µm or less. It should be noted that the average particle size (D50) of the negative electrode active material can be determined by, for example, a laser diffraction/scattering method.

The negative electrode active material layer 64 can include components other than the active material, such as a binder or a thickener. Examples of the binder include styrene-butadiene rubber (SBR) and polyvinylidene fluoride (PVdF). Examples of the thickener include carboxymethyl cellulose (CMC).

A content of the negative electrode active material in the negative electrode active material layer 64 is desirably 90% by mass or more, more desirably 95% by mass or more and 99% by mass or less. A content of the binder in the negative electrode active material layer 64 is desirably 0.1% by mass or more and 8% by mass or less, more desirably 0.5% by mass or more and 3% by mass or less. A content of the thickener in the negative electrode active material layer 64 is desirably 0.3% by mass or more and 3% by mass or less, more desirably 0.5% by mass or more and 2% by mass or less.

The thickness of the negative electrode active material layer 64 is not particularly limited, and is, for example, 10 µm or more and 400 µm or less, desirably 20 µm or more and 300 µm or less.

In this embodiment, the negative electrode active material layer 64 has an apparent density (so-called negative electrode density) of 1.30 g/cm³ to 1.69 g/cm³. When the apparent density exceeds 1.69 g/cm³, effects of enhancing input characteristics and high-temperature storage characteristics cannot be obtained. From the viewpoint of more excellent input characteristics, the apparent density is desirably 1.30 g/cm³ to 1.50 g/cm³. From the viewpoint of especially excellent input characteristics and especially excellent high-temperature storage characteristics, the apparent density is more desirably 1.30 g/cm³ to 1.40 g/cm³. The apparent density of the negative electrode active material layer 64 can be increased by a press treatment on the negative electrode active material layer 64 in fabrication of the negative electrode 60, and can be adjusted by changing conditions of this press treatment.

It should be noted that the apparent density of the negative electrode active material layer 64 is a ratio of the weight (g) of the negative electrode active material layer 64 to an apparent volume (cm³) of the negative electrode active material layer 64 including gaps. For example, the apparent density can be easily calculated as (a weight per unit area of negative electrode active material layer 64/thickness of negative electrode active material layer 64) by measuring a weight per unit area of the negative electrode active material layer 64 and a thickness of the negative electrode active material layer 64.

The weight per unit area of the negative electrode active material layer 64 is not particularly limited, desirably 8.5 mg/cm² or more, more desirably 10 mg/cm² or more, even more desirably 15 mg/cm² or more, particularly desirably 20 mg/cm² or more. The weight per unit area of the negative electrode active material layer 64 may be 50 mg/cm² or less, or 40 mg/cm² or less. Such weights per unit area are advantageous especially for application as a drive power supply for HEVs. It should be noted that the weight per unit area is a weight per unit area of the negative electrode active material layer 64 per one surface of the negative electrode current collector 62.

Examples of the separator 70 include a porous sheet (film) of a resin such as polyethylene (PE), polypropylene (PP), polyester, cellulose, or polyamide. The porous sheet may have a single-layer structure or a laminated structure of two or more layers (e.g., three-layer structure in which PP layers are stacked on each surface of a PE layer). A heat-resistance layer (HRL) containing, for example, ceramic particles may be provided on a surface of the separator 70.

The thickness of the separator 70 is not particularly limited, and is, for example, 5 µm or more and 50 µm or less, desirably 10 µm or more and 30 µm or less. An air permeability of the separator 70 obtained by a Gurley permeability test is not particularly limited, and is desirably 350 sec./100 cc or less.

The nonaqueous electrolyte 80 contains a nonaqueous solvent and an electrolyte salt (also referred to as a supporting electrolyte). In this embodiment, the nonaqueous solvent contains 1% by volume to 30% by volume of a carboxylate ester having 4 or less carbon atoms.

The carboxylate ester having 4 or less carbon atoms has the effect of reducing viscosity of the nonaqueous electrolyte 80. Thus, when a carboxylate ester has 5 or more carbon atoms, viscosity of the nonaqueous electrolyte 80 cannot be sufficiently reduced. Examples of the carboxylate ester having 4 or less carbon atoms include methyl acetate, ethyl acetate, vinyl acetate, and methyl propionate. Among these, methyl acetate is desirable because of especially high effect of reducing viscosity of the nonaqueous electrolyte 80.

The nonaqueous solvent includes an organic solvent other than the carboxylate ester. Examples of the organic solvent include carbonates, ethers, nitriles, sulfones, and lactones, and among these, carbonates are especially desirable. Examples of the carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such organic solvents may be used alone, or two or more of them may be used in combination.

From the viewpoint of higher input characteristics, the nonaqueous solvent contains desirably 3% by volume to 30% by volume, more desirably 6% by volume to 30% by volume, even more desirably 15% by volume to 30% by volume, of the carboxylate ester having 4 or less carbon atoms. The nonaqueous solvent desirably contains the carboxylate ester having 4 or less carbon atoms and carbonates, and may contain only the carboxylate ester having 4 or less carbon atoms and carbonates. The carbonates desirably contain both chain carbonate and cyclic carbonate.

Desired examples of the electrolyte salt include lithium salts (desirably LiPF₆) such as LiPF₆, LiBF₄, and lithium bis(fluorosulfonyl)imide (LiFSI). A concentration of the electrolyte salt is desirably 0.7 mol/L or more and 1.3 mol/L or less.

The nonaqueous electrolyte 80 may contain components except for the nonaqueous solvent and the electrolyte salt (hereinafter referred to as optional components). Desired examples of the optional components include film forming agents such as vinylene carbonate and an oxalato complex. Among these, the oxalato complex is desirable, and examples of the oxalato complex include lithium bis(oxalato)borate (LiBOB) and lithium difluoro oxalato borate (LiDFOB). When the nonaqueous electrolyte 80 contains the film forming agent, high-temperature storage characteristics of the lithium ion secondary battery 100 can be further enhanced. The concentration of the film forming agent in the nonaqueous electrolyte 80 is not particularly limited, and is, for example, 0.05% by mass to 1.2% by mass, desirably 0.1% by mass to 1.0% by mass.

Examples of the other optional components include various additives such as a thickener and gas generating agents (e.g., biphenyl (BP) and cyclohexylbenzene (CHB)).

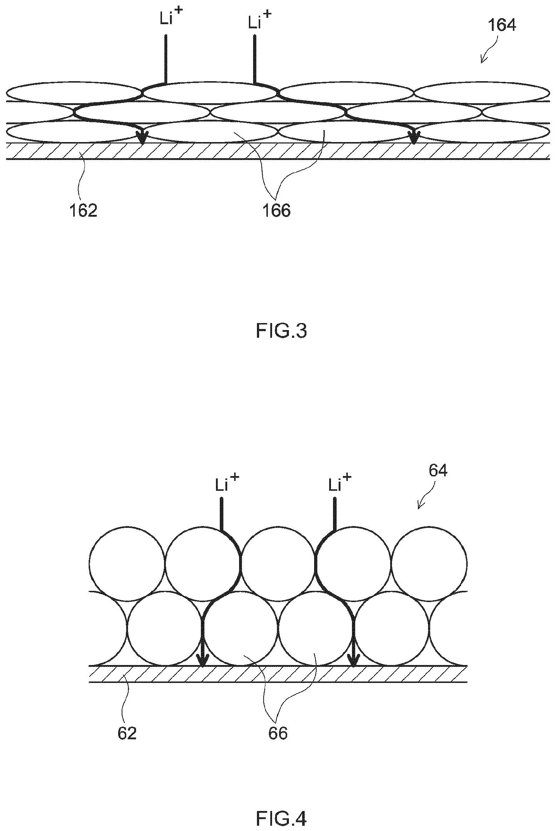

As described above, the negative electrode active material layer 64 includes the carbon material particles having an average circularity of 0.86 or more, the negative electrode active material layer 64 has an apparent density of 1.30 g/cm³ to 1.69 g/cm³, and the nonaqueous solvent of the nonaqueous electrolyte 80 contains 1% by volume to 30% by volume of the carboxylate ester having 4 or less carbon atoms, whereby input characteristics and high-temperature storage characteristics of the lithium ion secondary battery 100 can be thereby significantly enhanced. Reasons for the enhancement will be described with reference to FIGS. 3 and 4.

FIG. 3 shows a schematic cross-sectional view of a negative electrode in an example in which carbon material particles of the negative electrode active material has a low average circularity (i.e., average circularity less than 0.86). As shown in FIG. 3, in the case of a large negative electrode density, a press treatment for increasing density causes the major axes of particles 166 to be aligned in parallel with the negative electrode current collector 162. In this case, gaps through which a nonaqueous electrolyte containing lithium ions (Li⁺) enters a negative electrode active material layer 164 become narrow and decrease in number. Accordingly, the negative electrode active material layer 164 is not easily impregnated with the nonaqueous electrolyte. In addition, as indicated by the arrow in FIG. 3, a path in which Li⁺ reaches a deepest portion of the negative electrode active material layer 164 (i.e., vicinity of the negative electrode current collector 162) is long.

On the other hand, FIG. 4 shows a cross section of a negative electrode in an example in which the circularity of the carbon material of the negative electrode active material is high (i.e., 0.86 or more). In the case where carbon material particles 66 have high circularities, there are a large number of gaps through which a nonaqueous electrolyte containing lithium ions (Li⁺) enters the negative electrode active material layer 64 and a path in which Li⁺ reaches to a deepest portion of the negative electrode active material layer 64 (i.e., vicinity of the negative electrode current collector 62) is short. Accordingly, input characteristics are enhanced.

However, in a case where the negative electrode active material layer 64 is allowed to have a large density, input characteristics are insufficiently enhanced, and high-temperature storage characteristics are also insufficiently enhanced. The inventors of the present disclosure have found that this is because the gaps among the carbon material particles 66 become narrow and, as a result, the negative electrode active material layer 64 is not easily impregnated with the nonaqueous electrolyte 80 containing Li⁺.

In view of this, in this embodiment, the nonaqueous electrolyte 80 is allowed to contain a predetermined amount of the carboxylate ester having 4 or less carbon atoms, and thereby viscosity of the nonaqueous electrolyte 80 is reduced. Thus, even in a case where the negative electrode active material layer 64 has a large density so that gaps among the carbon material particles 66 are narrow, the nonaqueous electrolyte 80 easily enters the gaps and the negative electrode active material layer 64 can be sufficiently impregnated with the nonaqueous electrolyte 80. As a result, input characteristics of the lithium ion secondary battery 100 can be further enhanced. In addition, since the negative electrode active material layer 64 is insufficiently impregnated with the nonaqueous electrolyte 80, a coating can be uniformly formed over the entire negative electrode active material layer 64, and thus, capacity degradation after long-term storage of the battery at high temperatures can be suppressed. That is, high-temperature storage characteristics can be enhanced. Furthermore, since the carbon material particles 66 have high circularities and have substantially spherical shapes, a coating on the surfaces of the carbon material particles 66 is uniform. Accordingly, high-temperature storage characteristics can be further enhanced. That is, input characteristics and high-temperature storage characteristics of the lithium ion secondary battery 100 can be significantly enhanced. It should be noted that the coating described above is formed by decomposition of the nonaqueous electrolyte 80. Accordingly, in a case where the nonaqueous electrolyte 80 contains a film forming agent, quality of the coating is enhanced, and high-temperature storage characteristics can be further enhanced.

As described above, the lithium ion secondary battery 100 has both excellent input characteristics and excellent high-temperature storage characteristics. The lithium ion secondary battery 100 is applicable to various applications. Examples of desired applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for, for example, a small-size power storage device.

The opportunity of charging the drive power supply in an HEV is limited to power generation during traveling of the HEV. Thus, the lithium ion secondary battery 100 having especially excellent input characteristics is advantageous especially for application for HEVs. Thus, the lithium ion secondary battery 100 is especially advantageously applicable to a drive power supply of an HEV. The lithium ion secondary battery 100 can be used in a battery module in which a plurality of batteries are typically connected in series and/or in parallel.

The foregoing description is directed to the square lithium ion secondary battery 100 including the flat wound electrode body 20 as an example. Alternatively, the lithium ion secondary battery can also be configured as a lithium ion secondary battery including a stacked-type electrode body (i.e., electrode body in which a plurality of positive electrodes and a plurality of negative electrodes are alternately stacked). The lithium ion secondary battery can also be configured as a cylindrical lithium ion secondary battery or a laminated-case lithium ion secondary battery.

The secondary battery according to this embodiment can be configured as a nonaqueous secondary battery other than a lithium ion secondary battery according to a known method.

Examples of the present disclosure will now be described in detail, but are not intended to limit the present disclosure to these examples.

### [Examples 1 to 11 and Comparative Examples 1 to 4]

### fabrication of Evaluation Lithium Ion Secondary Battery>

As negative electrode active materials, the following three carbon materials (natural graphite particles) were prepared. These natural graphite particles were coated with amorphous carbon.

**[Table 1]**

| | Carbon Material | Shape | Average Circularity | Average Particle Size D50 (µm) |
|---|---|---|---|---|
| Examples 1-12, Comparative Examples 1, 2 | natural graphite | spherical | 0.89 | 10 |
| Comparative Example 3 | natural graphite | spherical | 0.78 | 10 |
| Comparative Example 4 | natural graphite | scaly | 0.68 | 20 |

An average circularity of natural graphite particles was obtained with a commercially available static automatic image analysis system ("Morphologi G3/G3SE" manufactured by Malvern Panalytical) by the following manner. First, natural graphite particles were placed to be dispersed without agglomeration on a base material, and a projected image of these particles was obtained with an optical microscope. This image was converted to digital data with device-attached software, and circularities of 1000 or more of the particles were calculated. An average of these circularities was calculated, thereby obtaining an average circularity. An average particle size was obtained by measuring a median diameter D50 of natural graphite particles with a commercially available laser diffraction/scattering particle size distribution analyzer.

The negative electrode active material, styrene-butadiene rubber (SBR) as a binder, and carboxymethyl cellulose (CMC) as a thickener were mixed with ion-exchanged water at a mass ratio of active material: SBR : CMC = 99 : 0.5 : 0.5, thereby preparing negative electrode slurry. This slurry was applied in a band shape onto each surface of long copper foil with a thickness of 8 µm, and then dried and pressed, thereby producing a negative electrode sheet. A weight per unit area of the negative electrode active material layer per one surface was 10 mg/cm². At this time, the density was adjusted to a negative electrode density (apparent density of negative electrode active material layer) shown in Table 2 by changing press conditions.

First, LiNi_{1/3}Co_{1/3}Mn_{1/3}O₂ (LNCM) as a positive electrode active material, acetylene black (AB) as a conductive agent, and polyvinylidene fluoride (PVdF) as a binder were mixed with N-methylpyrrolidone (NMP) at a mass ratio of LNCM : AB : PVdF = 92 : 5 : 3, thereby preparing positive electrode slurry. This slurry was applied in a band shape onto each surface of long aluminum foil with a thickness of 15 µm, and then dried and pressed, thereby producing a positive electrode sheet.

As a separator, a porous polyolefin sheet (thickness: 20 µm) having a three-layer structure of PP/PE/PP provided with an HRL (thickness: 4 µm) was prepared. The positive electrode sheet, the negative electrode sheet fabricated as described above, and two separator sheets prepared as described above were stacked and wound, thereby obtaining a wound electrode body. At this time, the HRL of the separator were oriented to face the positive electrode sheet.

A mixed solvent including ethylene carbonate (EC), dimethyl carbonate (DMC), ethyl methyl carbonate (EMC), and a carboxylate ester at a volume ratio of 30 : 30 : 40-x : x was prepared. As shown in Table 2, methyl acetate (MA) or methyl propionate (MP) was used as the carboxylate ester, and the value of x (volume ratio; also referred to % by volume) is shown in Table 2. Into this mixed solvent, lithium bis(oxalate) was dissolved at a concentration of 1.0% by mass, and LiPF₆ as an electrolyte salt was dissolved at a concentration of 1.0 mol/L. In this manner, a nonaqueous electrolyte was obtained.

Terminals and the like were attached to the obtained electrode body, and the resultant was housed in a battery case together with a nonaqueous electrolyte, and sealed, thereby obtaining an evaluation lithium ion secondary battery.

### <Activation Treatment>

Each of the thus-fabricated evaluation lithium ion secondary batteries was placed in a thermostat at 25°C. Each evaluation lithium ion secondary battery was charged with a constant current to 4.10 V at a current value of 0.3 C. Thereafter, the battery was discharged with a constant current to 3.00 V at a current value of 0.3C.

### <Initial Characteristic Evaluation>

Each of the thus-activated evaluation lithium ion secondary batteries was subjected to constant-current/constant-voltage charging in which each of the evaluation lithium ion secondary batteries was charged with a constant current to 4.10 V at a current value of 0.2 C, and then, charged with a constant voltage to a current value of 1/50 C to obtain a fully charged state. Subsequently, the evaluation lithium ion secondary battery was discharged with a constant current to 3.00 V at a current value of 0.2 C. A discharge capacity at this time was measured and defined as an initial capacity.

The initial capacity was defined as an SOC of 100%, and each evaluation lithium ion secondary battery was charged in a thermostat at 25°C at a current value of 0.3 C until the SOC reached 50%. Then, in a thermostat at -10°C, the battery was charged for 10 seconds at a current value of 1 C, 3 C, 5 C, and 10 C, and battery voltages after charge at these current values were measured. The current values and the battery voltages were plotted to obtain I-V characteristics in charge, and from the slope of the obtained line, an IV resistance (Ω) in charge was obtained as an initial resistance. In a case where the initial resistance of the evaluation lithium ion secondary battery of Comparative Example 1 was 100, ratios of initial resistances of other evaluation lithium ion secondary batteries to the evaluation lithium ion secondary battery of Comparative Example 1 were obtained. Table 2 shows results. As the ratio of the initial resistance decreases, input characteristics become higher.

### <High-temperature Storage Characteristic Evaluation>

Each of the thus-activated evaluation lithium ion secondary batteries was charged at a current value of 0.3 C until the SOC reached 80%. Each evaluation lithium ion secondary battery was stored for 60 days in a thermostat at 60°C. Subsequently, the battery was discharged with a constant current to 3.00 V at a current value of 0.2 C. Then, each of the evaluation lithium ion secondary batteries was subjected to constant-current/constant-voltage charging in which each of the evaluation lithium ion secondary batteries was charged with a constant current to 4.10 V at a current value of 0.2 C, and then, charged with a constant voltage to a current value of 1/50 C to obtain a fully charged state. Subsequently, the evaluation lithium ion secondary battery was discharged with a constant current to 3.00 V at a current value of 0.2 C. A discharge capacity at this time was measured and defined as a recovery capacity. From Equation: (recovery capacity/initial capacity) × 100, a capacity retention rate (%) was determined. Table 2 shows results. As the capacity retention rate increases, high-temperature storage characteristics become higher.

**Table 2]**

| | Negative Electrode Active Material Average Circularity | Negative Electrode Density (g/cm³) | Carboxylate Ester | | Initial Resistance Ratio | Capacity Retention Rate After Storage (%) |
|---|---|---|---|---|---|---|
| | | | Type | Volume Ratio x (vol%) | | |
| Example 1 | 0.89 | 1.30 | MA | 3 | 83 | 92 |
| Example 2 | 0.89 | 1.40 | MA | 3 | 85 | 91 |
| Example 3 | 0.89 | 1.50 | MA | 3 | 88 | 89 |
| Example 4 | 0.89 | 1.60 | MA | 3 | 91 | 89 |
| Example 5 | 0.89 | 1.65 | MA | 3 | 92 | 89 |
| Example 6 | 0.89 | 1.69 | MA | 3 | 94 | 89 |
| Example 7 | 0.89 | 1.50 | MP | 3 | 90 | 89 |
| Example 8 | 0.89 | 1.50 | MA | 1 | 89 | 89 |
| Example 9 | 0.89 | 1.50 | MA | 6 | 85 | 90 |
| Example 10 | 0.89 | 1.50 | MA | 15 | 82 | 91 |
| Example 11 | 0.89 | 1.50 | MA | 30 | 80 | 90 |
| Comparative Example 1 | 0.89 | 1.50 | - | 0 | 100 | 70 |
| Comparative Example 2 | 0.89 | 1.70 | MA | 3 | 99 | 68 |
| Comparative Example 3 | 0.78 | 1.29 | MA | 3 | 103 | 89 |
| Comparative Example 4 | 0.68 | 1.41 | MA | 3 | 112 | 65 |

The results of Table 2 show that in the case where the negative electrode active material layer included carbon material particles having an average circularity of 0.86 or more, the negative electrode active material layer had an apparent density of 1.30 g/cm³ to 1.69 g/cm³, and a nonaqueous solvent of the nonaqueous electrolyte 80 contained 1% by volume to 30% by volume of a carboxylate ester having 4 or less carbon atoms, the lithium ion secondary battery exhibited excellent input characteristics and excellent high-temperature storage characteristics. This demonstrates that the nonaqueous electrolyte secondary battery disclosed here shows both excellent input characteristics and excellent high-temperature storage characteristics.

Specific examples of the present disclosure have been described in detail hereinbefore, but are merely illustrative examples, and are not intended to limit the scope of claims. The techniques described in claims include various modifications and changes of the above exemplified specific examples.

That is, the nonaqueous electrolyte secondary battery disclosed here is any one of items [1] to [7].
[1] A nonaqueous electrolyte secondary battery including:
   a positive electrode;
   a negative electrode; and
   a nonaqueous electrolyte, wherein
   the negative electrode includes a negative electrode active material layer containing a negative electrode active material,
   the negative electrode active material includes carbon material particles having an average circularity of 0.86 or more,
   the negative electrode active material layer has an apparent density of 1.30 g/cm³ to 1.69 g/cm³,
   the nonaqueous electrolyte contains a nonaqueous solvent and an electrolyte salt, and
   the nonaqueous solvent contains 1% by volume to 30% by volume of a carboxylate ester having 4 or less carbon atoms.
[2] The nonaqueous electrolyte secondary battery of item [1] in which the negative electrode active material layer has an apparent density of 1.30 g/cm³ to 1.50 g/cm³.
[3] The nonaqueous electrolyte secondary battery of item [1] or [2] in which the nonaqueous solvent contains 6% by volume to 30% by volume of the carboxylate ester.
[4] The nonaqueous electrolyte secondary battery of any one of items [1] to [3] in which the carboxylate ester is methyl acetate.
[5] The nonaqueous electrolyte secondary battery of any one of items [1] to [4] in which the nonaqueous electrolyte further contains a film forming agent.
[6] The nonaqueous electrolyte secondary battery of any one of items [1] to [5] in which the negative electrode active material layer has a weight per unit area of 10 mg/cm² or more.
[7] The nonaqueous electrolyte secondary battery of any one of items [1] to [6] in which the nonaqueous electrolyte secondary battery is a battery of a vehicle driving power supply for hybrid vehicles.

## Claims

1. A nonaqueous electrolyte secondary battery (100) comprising:
a positive electrode (50):
a negative electrode (60); and
a nonaqueous electrolyte (80), wherein
the negative electrode (60) includes a negative electrode active material layer (64) containing a negative electrode active material,
the negative electrode active material includes carbon material particles havin g an average circularity of 0.86 or more,
the negative electrode active material layer (64) has an apparent density of 1.30 g/cm3 to 1.69 g/cm3,
the nonaqueous electrolyte (80) contains a nonaqueous solvent and an electro lyte salt, and
the nonaqueous solvent contains 1% by volume to 30% by volume of a car boxylate ester having 4 or less carbon atoms.

2. The nonaqueous electrolyte secondary battery (100) according to claim 1, wherein the negative electrode active material layer (64) has an apparent density of 1. 30 g/cm3 to 1.50 g/cm3.

3. The nonaqueous electrolyte secondary battery (100) according to claim 1, wherein the nonaqueous solvent contains 6% by volume to 30% by volume of the ca rboxylate ester.

4. The nonaqueous electrolyte secondary battery (100) according to claim 1, wherein the carboxylate ester is methyl acetate.

5. The nonaqueous electrolyte secondary battery (100) according to claim 1, wherein the nonaqueous electrolyte (80) further contains a film forming agent.

6. The nonaqueous electrolyte secondary battery (100) according to claim 1, wherein the negative electrode active material layer (64) has a weight per unit area o f 10 mg/cm2 or more.

7. The nonaqueous electrolyte secondary battery (100) according to claim 1, wherein the nonaqueous electrolyte secondary battery (100) is a battery of a vehicle driving power supply for hybrid vehicles.
